# EUROPÄISCHE PATENTSCHRIFT

(11) **EP 0 983 887 B1**
(45) Veröffentlichungstag und Bekanntmachung des Hinweises auf die Patenterteilung: **04.12.2002**
(21) Anmeldenummer: 99117171.1
(22) Anmeldetag: 01.09.1999
(51) Int. Cl.: B60H 1/00

(54) **Bedieneinheit für eine Fahrzeugkomponente, insbesondere für eine Heizungs- oder Klimaanlage**
Control unit for a vehicle component, particularly for heating or air condition
Unité de commande pour un élément de véhicule, en particulier pour système de chauffage ou de climatisation

(30) Priorität: 03.09.1998 DE 19840270
(43) Veröffentlichungstag der Anmeldung: 08.03.2000
(73) Patentinhaber: Hella KG Hueck & Co., 59552 Lippstadt (DE)
(72) Erfinder: Laukemper, Franz-Josef, 33397 Rietberg (DE)

(56) Entgegenhaltungen:
- FR-A- 2 623 776
- US-A- 4 591 153
- US-A- 5 281 049
- US-A- 5 540 180
- US-A- 5 636 682

## Beschreibung

Die Erfindung betrifft eine Bedieneinheit für eine Fahrzeugkomponente, insbesondere für eine Heizungs- oder Klimaanlage, zum mechanischen Verstellen mindestens eines Elements der Fahrzeugkomponente, insbesondere einer Klappe im Luftverteilertrakt der Heizungs- oder Klimaanlage.

Bedieneinheiten für Fahrzeugkomponenten sind in unterschiedlichen Ausgestaltungen je nach den gegebenen Anforderungen bekannt. Bei einer Heizungs- oder Klimaanlage eines Fahrzeuges beispielsweise werden durch Betätigung von Bedienelementen der Bedieneinheit Verstellhebel mechanisch verstellt, die drehbar oder in sonstiger Weise bewegbar am Gehäuse der Bedieneinheit gelagert sind. Über Bowdenzüge werden dann Verstellelemente der Fahrzeugkomponente, im Falle einer Heizungs- bzw. Klimaanlage Luftverteilungsklappen des Heizkastens verstellt.

Eine gattungsgemäße Bedieneinheit ist aus US-A-4 591 153 bekannt.

Für Fahrzeuge, die sowohl in Form von Linkslenkern als auch in Form von Rechtslenkern angeboten werden, muß im Regelfall die Bedieneinheit "gespiegelt" werden. Das bedeutet für den Hersteller der Bedieneinheit, daß ein zweiter "gespiegelter" Werkzeugsatz zur Herstellung der einzelnen meist als Spritzgußteile vorliegenden Elemente der Bedieneinheit erforderlich ist. Dies erhöht in nicht unerheblichem Maße die Herstellungskosten der Bedieneinheit.

Der Erfindung liegt die Aufgabe zugrunde, eine Bedieneinheit für eine Fahrzeugkomponente vorzuschlagen, die unter Verwendung einer lediglich reduzierten Anzahl an Teilen sowohl für Linkslenkerals auch für Rechtslenker-Fahrzeuge eingesetzt werden kann.

Zur Lösung dieser Aufgabe wird mit der Erfindung eine Bedieneinheit für eine Fahrzeugkomponente, insbesondere für eine Heizungs- und/oder Klimaanlage, zum mechanischen Verstellen mindestens eines Elements der Fahrzeugkomponente, insbesondere einer Klappe im Luftverteilungstrakt der Heizungs- und/oder Klimaanlage, vorgeschlagen, wobei die Bedieneinheit versehen ist mit
- einem Gehäuse mit gegenüberliegenden oberen und unteren Wänden sowie einer Frontblende,
- mindestens einem an der Frontblende angeordneten Betätigungsorgan,
- einer mit dem Betätigungsorgan gekoppelten ersten Verstellhebelanordnung mit mindestens einem ersten Verstellhebel, der längs eines Verstellweges aus einer ersten Verstellposition in eine zweite Verstellposition und umgekehrt verstellbar ist, wenn das Betätigungsorgan bei Ausrichtung des Gehäuses bei Einbau in einem Linkslenker-Fahrzeug in eine erste bzw. zweite Bewegungsrichtung bewegt wird,
- mindestens einer ersten Halterungsaufnahme für einen Halterungsblock an einer Führungshülse für eine an dem mindestens einen ersten Verstellhebel anbringbaren Seele eines Bowdenzuges, wenn das Gehäuse den Zustand des Einbaus in einem Linkslenker-Fahrzeug einnimmt, wobei die mindestens eine erste Halterungsaufnahme in Erstreckung des Verstellweges des Verstellarms an dem Gehäuse angeordnet ist,
- einer zum Austausch gegen die erste Verstellhebelanordnung vorgesehene zweite Verstellhebelanordnung mit mindestens einem zweiten Verstellhebel, der längs des Verstellweges aus der ersten Verstellposition in die zweite Verstellposition und umgekehrt verstellbar ist, wenn das Betätigungsorgan nach Drehung des gesamten Gehäuses zum Einbau in ein Rechtslenker-Fahrzeug um 180 ° um eine zur Frontblende rechtwinklig verlaufende und sich durch das Gehäuse erstreckende gedachte Achse in der zweiten bzw. ersten Bewegungsrichtung bewegt wird,
- mindestens einer zweiten Halterungsaufnahme für den Halterungsblock des Bowdenzuges, wenn das Gehäuse nach Drehung um 180° um die gedachte Achse den Zustand des Einbaus in einem Rechtslenker-Fahrzeug einnimmt, wobei die mindestens eine zweite Halterungsaufnahme in Erstreckung des Verstellweges des mindestens einen zweiten Verstellarms der mindestens einen ersten Halterungsaufnahme gegenüberliegend angeordnet ist,
- einem mehrere Symbole aufweisenden ersten Symbolträgerelement zur Anordnung an der Frontblende des sich im Einbauzustand für ein Linkslenker-Fahrzeug befindenden Gehäuses zur Verdeutlichung der Korrespondenz der Stellung des Betätigungsorgans mit der Stellung des zu verstellenden Elements der Fahrzeugkomponente und
- einem zweiten Symbolträgerelement zur Anordnung an der Frontblende des sich im Einbauzustand für ein Rechtslenker-Fahrzeug befindenden Gehäuses, wobei das zweite Symbolträgerelement die gleichen Symbole wie der erste Symbolträger aufweist, diese Symbole jedoch bezogen auf eine quer zur gedachten Achse und parallel zu der oberen und unteren Wand verlaufenden Spiegelachse gespiegelt zu den Symbolen des ersten Symbolträgerelements angeordnet und ausgerichtet sind.

Die erfindungsgemäße Bedieneinheit weist ein Gehäuse mit einer Frontblende und einer dazu im wesentlichen parallelen Rückseite auf und ist mit von der Frontblende aus sich erstreckenden oberen, unteren und seitlichen Wänden versehen. An der Frontblende ist mindestens ein Betätigungsorgan angeordnet, mit dem mindestens ein Verstellhebel der Bedieneinheit verstellt werden kann. Bei dem Betätigungsorgan handelt es sich entweder um ein Drehorgan, das drehbar an dem Gehäuse gelagert ist, oder um ein Verschiebeorgan, das linear verschiebbar am Gehäuse geführt ist. Bei Betätigung des Betätigungsorgans wird eine erste Verstellhebelanordnung mit mindestens einem ersten Verstellhebel verstellt, wobei sich der Verstellhebel zwischen einer ersten und einer zweiten Verstellposition bewegen läßt. Vorteilhafterweise ist die Verstellhebelanordnung mit einer Kurven- oder Kulissenscheibe versehen, die mit einem schwenkbar gelagerten Verstellhebel zusammenwirkt, um diesen in Abhängigkeit von der Verdrehung der Scheibe zu verschwenken. An dem Gehäuse ist ferner mindestens eine erste Halterungsaufnahme für den Halterungsblock eines Bowdenzuges angeordnet. Der Bowdenzug selbst ist mit einer Führungshülle versehen, die fest mit dem Halterungsblock verbunden ist. Aus der Führungshülle und dem Halterungsblock heraus ragt die Seele des Bowdenzuges, die entweder als Drahtseil oder als Draht ausgebildet ist. Die Halterungsaufnahme ist in Erstreckung des Verstellweges des Verstellarms im Bereich einer der beiden Verstellendpositionen des Verstellarms angeordnet.

Um die zuvor beschriebene Bedieneinheit in einem Rechtslenker anzuordnen, wird die erste Verstellhebelanordnung gegen eine zweite Verstellhebelanordnung ausgetauscht, die, wie die erste Verstellhebelanordnung mit dem Betätigungsorgan zusammenwirkt. Da das gesamte Gehäuse der Bedieneinheit um eine rechtwinklig zur Frontblende verlaufende gedachte Achse um 180° gedreht worden ist, würden, ohne weitere Maßnahmen, die beiden Verstellendpositionen des Verstellhebels nicht mehr mit den gewünschten Stellungen des Elements der Fahrzeugkomponente, also beispielsweise einer Klappe für die Luftverteilung des Heizkastens, übereinstimmen. Durch Austausch der ersten Verstellhebelanordnung durch die zweite Verstellhebelanordnung wird hier Abhilfe geschaffen, indem die Verschiebungsrichtungen des Verstellhebels in Abhängigkeit von den Bewegungsrichtungen des Betätigungsorgans gegenüber dem Einbau in einem Linkslenker-Fahrzeug umgekehrt werden. Um die Einbaulage des Bowdenzuges im Armaturenbrett bzw. der Instrumententafel des Fahrzeuges für Linkslenker- und für Rechtslenker-Fahrzeuge jedoch unverändert zu lassen, was im Hinblick auf die Montage und die Logistik (Bevorratung) von Vorteil ist, ist bei dem Gehäuse der erfindungsgemäßen Bedieneinheit eine zweite Halterungsaufnahme für den Halterungsblock eines Bowdenzuges vorgesehen, die der ersten Halterungsaufnahme gegenüberliegend und damit am anderen Ende des Verstellweges des Verstellarms angeordnet ist. Mit dieser Maßnahme wird also verhindert, daß für Links- und Rechtslenker-Fahrzeuge unterschiedliche Bowdenzüge eingesetzt werden müssen. Denn der Bowdenzugabgang von der Bedieneinheit ist in beiden Fällen derselbe. Der einzige Unterschied besteht noch darin, daß in dem einen Fall (beispielsweise Linkslenker-Fahrzeug) der Bowdenzug an der im Einbauzustand oberen Wand des Gehäuses angeordnet ist, während, nach Drehung des Gehäuses um 180° für den Einbau im Rechtslenker-Fahrzeug der Bowdenzug nun zur im Einbauzustand unteren Wand des Gehäuses geführt ist. Außerdem wird in beiden Einbauzuständen selbstverständlich jeweils eine unterschiedliche Halterungsaufnahme, nämlich im einen Fall die erste und im anderen Fall die zweite Halterungsaufnahme des Gehäuses zur Arretierung des Bowdenzuges verwendet. Aber selbst die unterschiedliche Hinführung des Bowdenzuges zum Gehäuse ist dann nicht gegeben, wenn die Halterungsaufnahmen für den Bowdenzug beispielsweise an der Rückseite des Gehäuses angeordnet sind.

Um die erfindungsgemäße Bedieneinheit desweiteren in einfacher Weise sowohl für Linkslenker- als auch für Rechtslenker-Fahrzeuge einsetzen zu können, ist es ferner zweckmäßig, wenn die Symbole auf der Frontblende auf einfache Weise ausgetauscht werden können. Diesbezüglich ist erfindungsgemäß vorgesehen, ein erstes und ein zweites Symbolträgerelement vorzusehen, von denen das eine für Linkslenker-Fahrzeuge und das andere für Rechtslenker-Fahrzeuge eingesetzt wird. Die Symbole auf diesen beiden Symbolträgerelementen sind um eine Symmetrie- bzw. Spiegelachse gespiegelt.

Insgesamt ergibt sich also mit dem erfindungsgemäßen Ansatz eine drastische Reduktion von für den Einbau der Bedieneinheit in einem Linkslenker- und in einem Rechtslenker-Fahrzeug erforderlichen Bauteilen. Letztendlich müssen nämlich lediglich die Verstellhebelanordnungen und insbesondere lediglich Kurvenoder Kulissenscheiben sowie die Symbolträgerelemente ausgewechselt werden. Bei entsprechender Auslegung der Verstellhebel ist es sogar möglich, diese unverändert für beide Fahrzeugtypen zu belassen. Man kann vorsehen, zwei Anlenkungspunkte bzw. Lagerpunkte für jeden Verstellhebel der Bedieneinheit im bzw. am Gehäuse auszubilden, um den Verstellhebel für jeden der beiden Fahrzeugtypen an unterschiedlichen Stellen lagern zu können.

Der zuvor beschriebene Fall betrifft die Situation, bei der das Bedienelement linear verschiebbar oder um eine zur Frontblende senkrecht verlaufende Drehachse drehbar ist. Bei Betätigungseinheiten für Fahrzeugkomponenten existieren mitunter aber auch Bedienelemente in Form von Rändelrädern, die um eine zur Frontblende im wesentlichen parallel verlaufende Drehachse drehbar sind und aus der Frontblende herausragen. Bei einem derartigen Betätigungsorgan befinden sich zumeist auf der Umfangswand des Rändelrades bzw. des Einstellrades mehrere Symbole. Würde man die für einen Linkslenker konzipierte Bedieneinheit mit einem derartigen Rändelrad durch Drehen der Bedieneinheit um 180° um die gedachte Achse dann in einem Rechtslenker-Fahrzeug einsetzen, so würden die Symbole auf dem Kopf stehen. Hier wird gemäß einer vorteilhaften Weiterbildung der Erfindung vorgeschlagen, einen zweiten Typ von Rändelrad bzw. Einstellrad vorzusehen, bei dem die Symbole um 180° gegenüber den Symbolen des ersten Typs von Rändelrad gedreht sind. Der mittels eines der beiden Rändelräder betätigten Schalter bleibt vorteilhafterweise unverändert, so daß in soweit dann lediglich der Unterschied zwischen den beiden Linkslenker- und Rechtslenker-Bedieneinheiten noch darin besteht, daß sich die Verstellrichtung, in der das Rändelrad zur Einstellung bestimmter Funktionen verdreht werden muß, umkehrt. Dies wird aber im praktischen Gebrauch als nicht störend empfunden.

Eine weitere Situation, die man bei Bedieneinheiten für Fahrzeugkomponenten des öfteren antrifft, besteht darin, daß mehrere Betätigungstasten mit diesen zugeordneten Schaltern an der Frontblende übereinander angeordnet sind. Um eine derartige Bedieneinheit, die beispielsweise für ein Linkslenker-Fahrzeug ausgelegt ist, nun als Rechtslenker-Fahrzeug durch einfaches Drehen der Bedieneinheit einsetzen zu können, ist es erforderlich, die Betätigungstasten selbst zu drehen, so daß die Symbole nicht länger auf dem Kopf stehen. Die Anordnung der übereinanderliegenden Betätigungstasten ist in beiden Fällen unterschiedlich, da ja die diesen Betätigungstasten zugeordneten Schalter nicht umgruppiert werden. Aber auch diese unterschiedliche Anordnung der übereinanderliegenden Betätigungstasten wird im praktischen Gebrauch als nicht störend empfunden; hier überwiegt, wie im Falle des oben beschriebenen Rändelrades, ganz eindeutig der Vorteil der reduzierten Herstellungskosten gegenüber dem Umstand, daß die Rändelrad-Einstellung und die Betätigungstasten-Anordnung bei einer Linkslenker-Bedieneinheit gegenüber der Rechtslenker-Bedieneinheit umgekehrt ist.

Nachfolgend wird anhand der Figuren ein Ausführungsbeispiel der Erfindung näher erläutert. Im einzelnen zeigen:
- Fig. 1: eine Vorderansicht auf die Bedieneinheit im Linkslenker-Einbauzustand mit angedeuteten Bowdenzugverläufen,
- Fig. 2: eine Vorderansicht der Bedieneinheit gemäß Fig. 1 im Rechtslenker-Einbauzustand, wobei auch hier die Bowdenzugverläufe dargestellt sind,
- Fig. 3: eine Ansicht der Vorderseite der Bedieneinheit bei abgenommener Blende, und zwar in der Linkslenker-Einbausituation,
- Fig. 4: eine Vorderseite der Frontblende in Ausrichtung bei Einbau in einem Linkslenker-Fahrzeug,
- Fig. 5: eine Darstellung ähnlich der gemäß Fig. 3, wobei das Gehäuse um eine zur Zeichenebene senkrecht verlaufende und sich durch das Gehäuse erstreckende gedachte Achse um 180° gedreht ist, so daß sich das Gehäuse der Bedieneinheit in der Rechtslenker-Einbauposition befindet,
- Fig. 6: eine Darstellung des Gehäuses bei abgenommener Frontblende ähnlich der gemäß Fig. 5, wobei jedoch das in Fig. 5 gestrichelte für den Linkslenker-Einbau vorgesehene Rändelrad gegen ein für den Rechtslenker-Einbau vorgesehenes Rändelrad ausgetauscht ist,
- Fig. 7: eine Vorderansicht der Frontblende, wie sie sich einstellt, wenn die Frontblende der Bedieneinheit für einen Linkslenker um 180° um eine zur Zeichenebene senkrechte gedachte durch die Frontblende verlaufende Achse gedreht ist, wie es für den Einbau der Bedieneinheit in einem Rechtslenker-Fahrzeug erforderlich ist, und
- Fig. 8: eine Darstellung ähnlich der gemäß Fig. 7, wobei jedoch die Symbole auf der Frontblende für den Einbau der Bedieneinheit in einem Rechtslenker-Fahrzeug ausgerichtet und angeordnet sind.

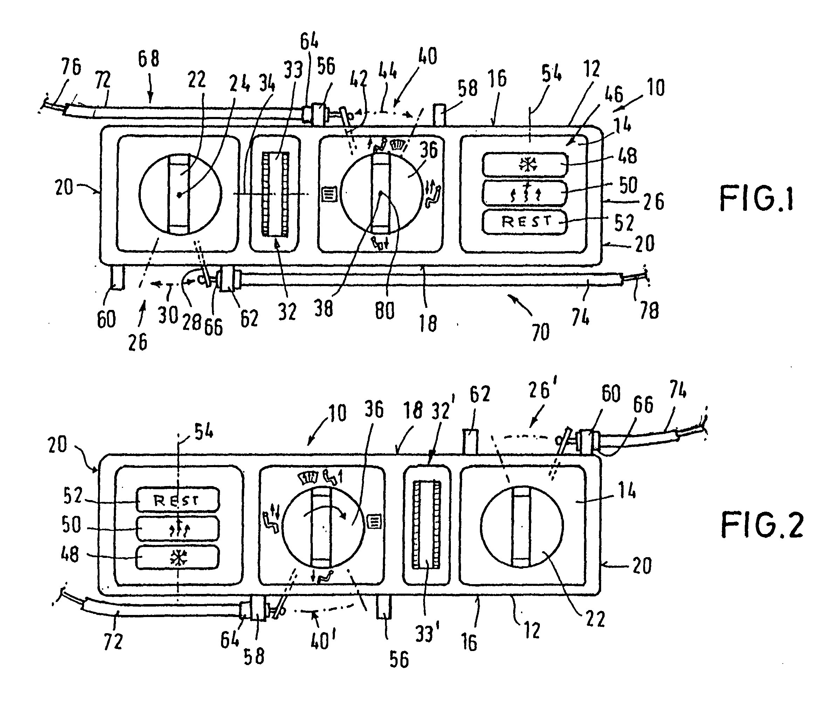

Fig. 1 zeigt die Vorderseite einer Bedieneinheit 10 für eine Heizungs- oder Klimaanlage in einem Fahrzeug. Die Bedieneinheit 10 weist ein Gehäuse 12 mit einer Frontblende 14 und einer dieser gegenüberliegenden (nicht dargestellten) Rückseite auf. Von der Frontblende 14 aus erstrecken sich bis zur Rückseite obere und untere Seitenwände 16,18 sowie Lateral-Seitenwände 20.

An der Frontblende 14 sind mehrere Betätigungsorgane angeordnet. Über ein Drehorgan 22, das um eine zur Frontblende 14 senkrechte Drehachse 24 drehbar gelagert ist, läßt sich beispielsweise die Temperatur einstellen. Mit dem Drehorgan 22 verbunden ist eine Hebelverstellvorrichtung 26, die eine (nicht dargestellte) Kulissen- oder Kurvenscheibe und einen mit dieser zusammenwirkenden Verstellhebel 28 aufweist, der längs eines Verstellweges 30 zwischen den beiden in Fig. 1 gezeigten Verstellendpositionen verschiebbar ist, wenn das Drehorgan 22 gedreht wird. Ferner ist die Bedieneinheit 10 mit einem Rändel-Einstellrad 32 versehen, das um eine parallel zur Frontblende 14 und quer zur Drehachse 24 des Drehorgans 22 verlaufende Drehachse 34 drehbar ist. Mit diesem Rändelrad 32 läßt sich beispielsweise das Gebläse ein- und ausschalten sowie die Gebläseleistung einstellen. Ferner weist die Bedieneinheit 10 ein weiteres Drehorgan 36 auf, das, wie das Drehorgan 22, um eine senkrecht zur Frontblende 14 verlaufende Drehachse 38 drehbar ist. Mit diesem Drehorgan 36 läßt sich die Verteilung der in den Fahrgastraum einströmenden Luft auf unterschiedliche Einströmdüsen einstellen. Das Drehorgan 36 ist mit einer Verstellhebelanordnung 40 verbunden, die eine mit dem Drehorgan 36 verbundene Kulissen- oder Kurvenscheibe (nicht dargestellt) zur Verschwenkung eines Verstellhebels 42 längs eines Verstellweges 44 aufweist.

Schließlich weist die Bedieneinheit 10 noch eine Gruppe 46 von Betätigungstasten 48, 50, 52 auf, mit denen weitere Funktionen der Heizungs- bzw. Klimaanlage eingestellt werden können und die übereinander, d.h. längs einer sowohl zu den Drehachsen 24 und 36 als auch der Drehachse 34 querverlaufenden Richtung 54 angeordnet sind.

Wie in Fig. 1 zu erkennen ist, befindet sich außen an der oberen Wand 16 des Gehäuses 12 mindestens ein Paar von Halterungsaufnahmen 56, 58, die beidseitig des Verstellweges 44 des Verstellarms 42 angeordnet sind. Tatsächlich existieren zwei derartiger Halterungsblockpaare, die, in der Darstellung gemäß Fig. 1, aus Gründen der Übersichtlichkeit nicht dargestellt sind, da sie hintereinanderliegen. Ein weiteres Paar von Halterungsaufnahmen 60, 62 befindet sich außen an der unteren Wand 18 des Gehäuses 12. Diese beiden Halterungsaufnahmen 60, 62 sind beidseitig des Verstellweges 30 des Verstellhebels 28 angeordnet. Sämtliche Halterungsaufnahmen dienen der Arretierung und Verriegelung von Halterungsblöcken 64, 66, wie sie bei Bowdenzügen 68, 70 vorgesehen sind. Für jeden dieser Bowdenzüge gilt, daß der zugehörige Halterungsblock 64, 66 an einer nicht stauchbaren, aber flexiblen Hülle 72, 74 angebracht ist, durch die sich die Seele 76, 78 erstreckt. Die Seelen 76,78 der beiden Bowdenzüge 68, 70 greifen an ihren einen Enden, an denen sie aus den Halterungsblöcken 64, 66 herausgeführt sind, an den Verstellhebeln 42, 28 an. Die Seelen 76, 78 führen zu Verstellelementen der Fahrzeugkomponente, die hier nicht dargestellt sind. In diesem Ausführungsbeispiel handelt es sich bei den Verstellelementen der Fahrzeugkomponente um Klappen im Luftzuführungstrakt, durch deren Verstellung die Temperatur und die Luftverteilung eingestellt werden kann.

Wie ferner in Fig. 1 gezeigt, verläuft der Bowdenzug 68 für die Luftverteilungseinstellung (genauer gesagt sind hier zwei Bowdenzüge 68 vorgesehen, da durch die Verstellung von zwei Luftklappen im Luftverteilungstrakt die Luftverteilung auf die Defrost-Auslaßdüsen, die Mannanströmer oder die Fußraumausströmer gesteuert wird) ausgehend von der Bedieneinheit 10 nach links, während der Bowdenzug 70 für die die Temperatur der einströmenden Luft beeinflussenden Mischerklappe von der Bedieneinheit 10 ausgehend nach rechts verläuft. Diese Verläufe der Bowdenzüge 68 und 70 ist einbaubedingt vorgegeben und bei einem Linkslenker-Fahrzeug genauso realisiert wie bei einem Rechtslenker-Fahrzeug. Soll die in Fig. 1 gezeigte Bedieneinheit 10, die dort für den Fall des Einbaus in einem Linkslenker-Fahrzeug gezeigt ist, nun in einem Rechtslenker-Fahrzeug eingesetzt werden, so muß die gesamte Einheit um eine zur Zeichenebene rechtwinklig und sich durch das Gehäuse 12 erstreckende gedachte Drehachse 80, die hier zufälligerweise mit der Drehachse 38 des Drehorgans 36 für die Luftverteilung zusammenfällt, gedreht werden. Damit ergibt sich die Ausrichtung der Bedieneinheit 10 gemäß Fig. 2. Was in der Darstellung gemäß Fig. 1 als obere Wand 16 dargestellt ist, ist in Fig. 2 unten gezeigt und umgekehrt. Während, bezogen auf den Bowdenzug 70, bei einem Linkslenker-Fahrzeug die Halterungsaufnahme 62 verwendet wird, wird bei einem Rechtslenker-Fahrzeug die Halterungsaufnahme 60 am Gehäuse 12 verwendet. Damit bleibt es dabei, daß der Bowdenzug 70 auch im Einbauzustand der Bedieneinheit 10 in einem Linkslenker-Fahrzeug ausgehend von der Bedieneinheit 10 nach links abgeht. Der Unterschied besteht jetzt lediglich noch darin, daß in der Darstellung gemäß Fig. 1 der Bowdenzug 70 im Bereich der Bedieneinheit 10 an der in Fig. 1 unten dargestellten Wand 18 verläuft, während er in Fig. 2 nun von oben an die Bedieneinheit 10 herangeführt ist. Eine entsprechende Situation stellt sich im Hinblick auf den bzw. die Bowdenzüge 68 ein. Hier werden im Falle der Verwendung der Bedieneinheit 10 in einem Linkslenker-Fahrzeug die Halterungsaufnahmen 56 verwendet, während bei Verwendung der Bedieneinheit 10 in einem Rechtslenker-Fahrzeug gemäß Fig. 2 die Halterungsaufnahmen 58 verwendet werden. Ferner ist jeder Bowdenzug 68 gemäß Fig. 1 von oben an das Gehäuse 12 herangeführt, während er in Fig. 2 von unten an das Gehäuse 12 herangeführt ist.

Durch die Drehung der Bedieneinheit 10 kehrt sich die Verstellrichtung der Verstellarme um, wenn nicht entsprechende Vorkehrungen getroffen werden. Da jedoch die Verstellpositionen des zu verstellenden Elements bei einem Linkslenker und bei einem Rechtslenker gleich sind, muß also die Verstellrichtung der Verstellarme angepaßt werden. Dies erfolgt durch Verwendung anderer Verstellhebelanordnungen 26',40' im Falle des Einsatzes der Bedieneinheit 10 in einem Rechtslenker. Der Unterschied dieser Verstellhebelanordnungen gegenüber denjenigen der Bedieneinheit für einen Linkslenker besteht beispielweise in unterschiedlich ausgebildeten Kurven- bzw. Kulissenscheiben, unterschiedlich ausgebildeten Verstellhebeln und/oder unterschiedlichen Lagerpositionen der Verstellhebel am Gehäuse.

Wie die vorstehende Beschreibung zeigt, ist es durch Vorsehen zusätzlicher Halterungsaufnahmen am Gehäuse, die, bezogen auf die jeweiligen Verstellhebel bzw. Verstellwege, symmetrisch zueinander angeordnet sind, möglich, die Bowdenzugführungen innerhalb des Fahrzeuges im wesentlichen unverändert zu belassen, wenn die Bedieneinheit einerseits in einem Linkslenker- und andererseits in einem Rechtslenker-Fahrzeug eingesetzt wird.

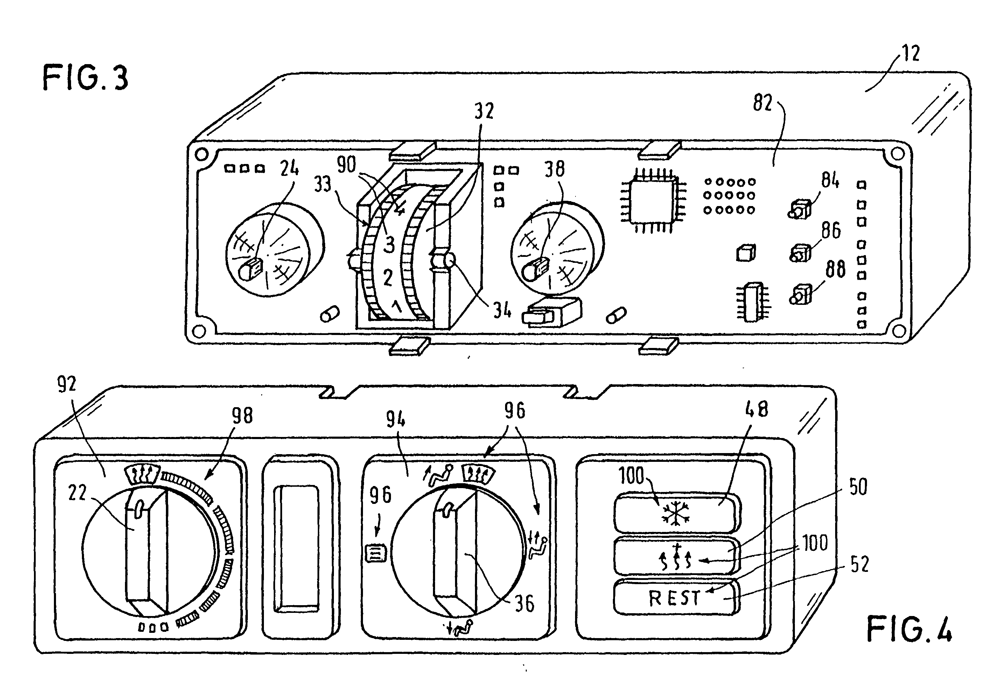

Um die Bedieneinheit 10 unter Beibehaltung einer möglichst großen Anzahl von Einzelbestandteilen sowohl in einem Linkslenker- als auch in einem Rechtslenker-Fahrzeug einsetzen zu können, indem sie lediglich um die gedachte Achse 80 jeweils um 180° verdreht zueinander eingebaut wird, ist es jedoch noch erforderlich die Gestaltung der Frontblende "zu spiegeln" bzw. zu verändern. Dies soll nachfolgend anhand der Fign. 3 bis 8 deutlich gemacht werden.

Fig. 3 zeigt eine Darstellung auf eine im Gehäuse 12 angeordnete Halte- bzw. Leiterplatine 82, auf der mechanische und elektrische Komponenten angeordnet sind, die den Drehorganen 22 und 36, dem Rändelrad 32 und den Betätigungstasten 48-52 zugeordnet sind. Fig. 4 zeigt die Darstellung der Frontblende 14 für den Fall des Einbaus der Bedieneinheit 10 in einem Linkslenker-Fahrzeug. Dies gilt im übrigen auch für die Darstellung gemäß Fig. 3.

Wie in Fig. 3 zu erkennen ist, ragen aus der Platine 82 die Drehachsen 24 und 38 der Drehorgane 22, 36 heraus, die mit den Verstellhebelanordnungen 26 und 40 gekoppelt sind. Ferner sind an der Platine 82 (Kurzhub-)Schalter bzw. Taster 84-88 angeordnet, die den Betätigungstasten 48-52 zugeordnet sind.

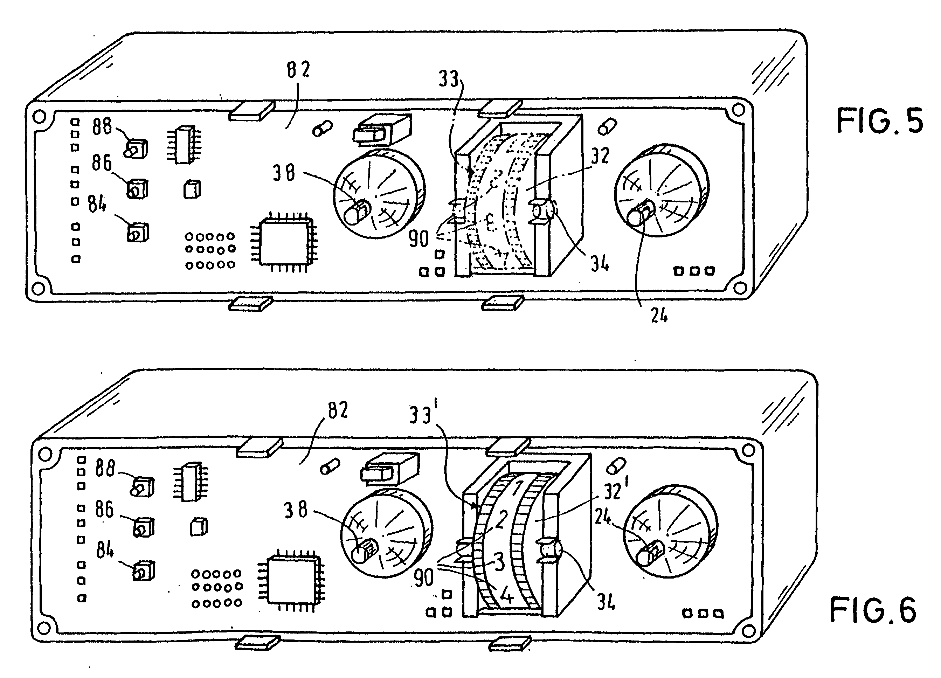

Erfindungsgemäß soll, wie der vorstehenden Beschreibung zu entnehmen ist, die Verwendung der Bedieneinheit in einem Rechtslenker-Fahrzeug dadurch realisiert werden, daß die für ein Linkslenker-Fahrzeug ausgelegte Bedieneinheit um 180° um die gedachte Achse 80 gedreht wird. Wenn man dies tut, so ergibt sich, was den Gehäuseteil der Bedieneinheit 10 ohne Frontblende 14 betrifft, die Situation gemäß Fig. 5. Da das Rändelrad 32 samt Lagerung auf der Platine 82 angeordnet ist, sind die auf der Umfangsseite 33 des Rändelrades 32 angeordneten Symbole 90 (Gebläsestufen) auf den Kopf gestellt. Diesem Umstand kann abgeholfen werden, indem das Rändelrad 32 durch ein Rändelrad 32' gemäß Fig. 6 ausgetauscht wird, auf dessen Umfangsfläche 33' die Symbole um 180° gedreht angeordnet sind. Da der dem Rändelrad 32 zugeordnete Schalter (nicht dargestellt) bei der Bedieneinheit 10 für einen Rechtslenker umgekehrt zur Situation für den Einbau in einem Linkslenker angeordnet ist, was mit der Verdrehung der Bedieneinheit 10 zusammenhängt, sind nun in beiden Einbaulagen die Drehrichtungen, in die die Rändelräder 32 bzw. 32' zur Einstellung einer bestimmten Gebläsestufe verdreht werden müssen, umgekehrt. Das ist aber nicht weiter kritisch.

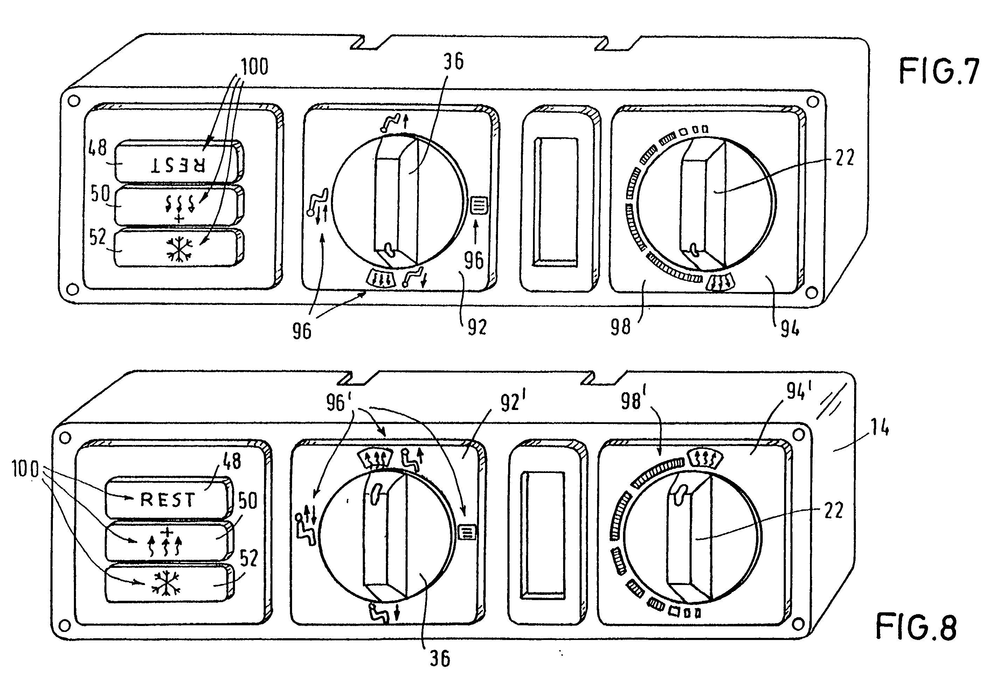

Nachdem wie vorstehend beschrieben damit für die korrekte Ausrichtung der Symbole von auf der Platine 82 angeordneten bzw. gelagerten Betätigungsorganen, wie in diesem Fall dem Rändelrad 32 bzw. 32' gesorgt worden ist, soll nun erläutert werden, wie die Anordnung der Bedienelemente und die Symbolik auf der Frontblende 14 verändert wird, wenn diese, zum Einbau der Bedieneinheit 10 in einem Rechtslenker-Fahrzeug, ausgehend von der Position für den Einbau in ein Linkslenker-Fahrzeug durch Drehung um die Achse 80 um 180° gedreht worden ist. Nach dieser Drehung ergibt sich ausgehend von der Linkslenker-Einbaulage gemäß Fig. 4 die Rechtslenker-Einbaulage gemäß Fig. 7. Zu erkennen ist, daß nun sämtliche Symbole spiegelverkehrt sind bzw. auf dem Kopf stehen. Dies kann einfach dadurch behoben werden, daß Symbolträgerelemente 92 und 94 mit Symbolen 96 für die Luftverteilung bzw. Symbolen 98 für die Temperatureinstellung, die an der Frontblende 14 gehalten sind, ausgetauscht werden. Diese Symbolträgerelemente, die für die in einem Linkslenker-Fahrzeug einzubauende Bedieneinheit 10 ausgelegt sind, werden gegen Symbolträgerelemente 92',94' mit Symbolen 96',98' ausgetauscht, wie sie im Falle der Verwendung der Bedieneinheit 10 in einem Rechtslenker-Fahrzeug in Bezug auf Anordnung und Ausrichtung sowie Positionierung erforderlich sind. Nach dieser Austausch der Symbolträger stattgefunden hat, verbleibt dann lediglich noch die Drehung der Betätigungstasten 48-52, damit auch deren Symbole 100 nicht länger auf dem Kopf stehen. Alternativ dazu können, insbesondere bei unterschiedlich ausgeformten Betätigungstasten 48-52 diese gegen Tasten ausgetauscht werden, auf denen die Symbole 100 umgekehrt dargestellt sind.

### BEZUGSZEICHENLISTE

- 10: Bedieneinheit
- 12: Gehäuse
- 14: Frontblende
- 16: Wand
- 18: Wand
- 20: Lateral-Seitenwände
- 22: Drehorgan
- 24: Drehachse
- 26: Verstellhebelanordnungen
- 28: Verstellhebel
- 30: Verstellweg
- 32: Rändel-Einstellrad, Rändelrad
- 33: Umfangsseite
- 34: Drehachse
- 36: Drehorgan
- 38: Drehachse
- 40: Verstellhebelanordnung
- 42: Verstellarm
- 44: Verstellweg
- 46: Gruppe
- 48: Betätigungstaste
- 50: Betätigungstaste
- 52: Betätigungstaste
- 54: Richtung/Aufeinanderfolge
- 56: Halterungsaufnahme
- 58: Halterungsaufnahme
- 60: Halterungsaufnahme
- 62: Halterungsaufnahme
- 64: Halterungsblock
- 66: Halterungsblock
- 68: Bowdenzug
- 70: Bowdenzug
- 72: Hülle
- 74: Hülle
- 76: Seele
- 78: Seele
- 80: Achse
- 82: Platine
- 84: Taster
- 86: Taster
- 88: Taster
- 90: Symbole
- 92: Symbolträgerelement
- 94: Symbolträgerelement
- 96: Symbole
- 98: Symbole
- 100: Symbole

## Patentansprüche

1. Bedieneinheit (10) für eine Fahrzeugkomponente, insbesondere für eine Heizungs- und/oder Klimaanlage, zum mechanischen Verstellen mindestens eines Elements der Fahrzeugkomponente, insbesondere einer Klappe im Luftverteilungstrakt der Heizungs- und/oder Klimaanlage, wobei die Bedieneinheit versehen ist mit
- einem Gehäuse (12) mit gegenüberliegenden oberen und unteren Wänden (16,18) sowie einer Frontblende (14),
- mindestens einem an der Frontblende (14) angeordneten Betätigungsorgan (36), **gekennzeichnet durch**
- eine mit dem Betätigungsorgan (36) gekoppelten erste Verstellhebelanordnung (40) mit mindestens einem ersten Verstellhebel (42), der längs eines Verstellweges (44) aus einer ersten Verstellposition in eine zweite Verstellposition und umgekehrt verstellbar ist, wenn das Betätigungsorgan (36) bei Ausrichtung des Gehäuses (12) bei Einbau in einem Linkslenker-Fahrzeug in eine erste bzw. zweite Bewegungsrichtung bewegt wird,
- mindestens eine erste Halterungsaufnahme (56) für einen Halterungsblock (64) an einer Führungshülle (72) für eine an dem mindestens einen ersten Verstellhebel (42) anbringbaren Seele (76) eines Bowdenzuges (68), wenn das Gehäuse (12) den Zustand des Einbaus in einem Linkslenker-Fahrzeug einnimmt, wobei die mindestens eine erste Halterungsaufnahme (56) in Erstreckung des Verstellweges (44) des Verstellarms (42) an dem Gehäuse (12) angeordnet ist,
- eine zum Austausch gegen die erste Verstellhebelanordnung (40) vorgesehene zweite Verstellhebelanordnung (40') mit mindestens einem zweiten Verstellhebel (42), der längs des Verstellweges (44) aus der ersten Verstellposition in die zweite Verstellposition und umgekehrt verstellbar ist, wenn das Betätigungsorgan (36) nach Drehung des gesamten Gehäuses (12) zum Einbau in ein Rechtslenker-Fahrzeug um 180° um eine zur Frontblende (14) rechtwinklig verlaufende und sich **durch** das Gehäuse (12) erstreckende gedachte Achse (80) in der zweiten bzw. ersten Bewegungsrichtung bewegt wird,
- mindestens eine zweite Halterungsaufnahme (58) für den Halterungsblock (64) des Bowdenzuges (68), wenn das Gehäuse (12) nach Drehung um 180° um die gedachte Achse (80) den Zustand des Einbaus in einem Rechtslenker-Fahrzeug einnimmt, wobei die mindestens eine zweite Halterungsaufnahme (58) in Erstreckung des Verstellweges (44) des mindestens einen zweiten Verstellarms (42) der mindestens einen ersten Halterungsaufnahme (56) gegenüberliegend angeordnet ist,
- ein mehrere Symbole (96) aufweisendes erstes Symbolträgerelement (92) zur Anordnung an der Frontblende (14) des sich im Einbauzustand für ein Linkslenker-Fahrzeug befindenden Gehäuses (12) zur Verdeutlichung der Korrespondenz der Stellung des Betätigungsorgans (36) mit der Stellung des zu verstellenden Elements der Fahrzeugkomponente und
- ein zweites Symbolträgerelement (92') zur Anordnung an der Frontblende (14) des sich im Einbauzustand für ein Rechtslenker-Fahrzeug befindenden Gehäuses (12), wobei das zweite Symbolträgerelement (92') die gleichen Symbole (96') wie der erste Symbolträger (92) aufweist, diese Symbole (96') jedoch bezogen auf eine quer zur gedachten Achse (80) und parallel zu der oberen und unteren Wand (16,18) verlaufenden Spiegelachse gespiegelt zu den Symbolen (96) des ersten Symbolträgerelements (92) angeordnet und ausgerichtet sind.

2. Bedieneinheit nach Anspruch 1, **dadurch gekennzeichnet, daß** das mindestens eine Betätigungsorgan (36) ein Drehorgan ist.

3. Bedieneinheit nach Anspruch 1 oder 2, **dadurch gekennzeichnet, daß** der erste Verstellhebel (42) der ersten Verstellhebelanordnung (40) gleich dem zweiten Verstellhebel (42) der zweiten Verstellhebelanordnung (40') ist.

4. Bedieneinheit nach einem der Ansprüche 1 bis 3, **dadurch gekennzeichnet, daß** an dem Gehäuse zwei Drehlager für die Verstellhebel (42) der ersten und zweiten Verstellhebelanordnung (40,40') vorgesehen sind und daß je nach Einbau des Gehäuses (12) in einem Linkslenker- oder in einem Rechtslenker-Fahrzeug die eine oder die andere Lagerung für die Verstellhebel verwendet wird.

5. Bedieneinheit nach einem der Ansprüche 1 bis 4, **dadurch gekennzeichnet, daß** ein zweites Betätigungsorgan (32) zur Anordnung an der Frontblende (14) bei sich im Einbauzustand für ein Linkslenker-Fahrzeug befindenden Gehäuse (12) vorgesehen ist, wobei das zweite Betätigungsorgan (32) nach Art eines um eine parallel zur Frontblende (14) und den oberen und unteren Wänden (16,18) des Gehäuses (12) verlaufende Drehachse (34) drehbares Einstellrad mit Symbolen (90) auf seinem bei Drehung aus der Frontblende (14) jeweils herausragenden Umfangsabschnitt (33) ausgebildet ist, und daß ein weiteres Betätigungsorgan (32') zur Anordnung an der Frontblende (14) bei sich im Einbauzustand für ein Rechtslenker-Fahrzeug befindenden Gehäuse (12) vorgesehen ist, wobei das weitere Betätigungsorgan (32') wie das zweite Betätigungsorgan (32) ausgebildet ist, die Symbole (90') jedoch um 180° gedreht sind.

6. Bedieneinheit nach einem der Ansprüche 1 bis 5, **dadurch gekennzeichnet, daß** an der Frontblende (14) eine Gruppe (46) von mehreren übereinander angeordneten und Symbole (100) tragenden Betätigungstasten (48,50,52) mit zugeordneten Schaltern (82,84,86) im Gehäuse (12) angeordnet sind, wenn sich das Gehäuse (12) in seinem Einbauzustand für ein Linkslenker-Fahrzeug befindet, und daß die Einbaureihenfolge (54) oder die Orientierung der Symbole (100) bezogen auf die Frontblende (14) jeweils umgekehrt bzw. um 180° gedreht ist, wenn die Gruppe von Betätigungstasten (48,50,52) an der Frontblende (14) des Gehäuses (12) im Einbauzustand für ein Rechtslenker-Fahrzeug angeordnet sind.

## Claims

1. A control unit (10) for a vehicle component, in particular for a heating and/or air-conditioning system, for the mechanical adjustment of at least one element of the vehicle component, in particular of a flap in the air distribution tract of the heating and/or air-conditioning system, the control unit being provided with
- a housing (12) with opposed upper and lower walls (16, 18) and a front panel (14),
- at least one operating element (36) arranged on the front panel (14), **characterised in that**
- a first adjusting lever arrangement (40) coupled to first operating element (36) and having at least a first adjusting lever (42) which is adjustable along an adjustment path (44) from a first adjustment position to a second adjustment position and inversely, when the operating element (36) is moved in a first or second direction of movement when the housing (12) is oriented for installation in a left-hand-drive vehicle,
- at least one first receiving member (56) for a retaining block (64) on a guide sleeve (72) for a core (76) of a Bowden cable (68) attachable to the at least one first adjusting lever (42), when the housing (12) adopts the state of installation in a left-hand-drive vehicle, the at least one first receiving member (56) being arranged on the housing (12) in the extension of the adjustment path (44) of the adjustment arm (42),
- a second adjustment lever arrangement (40') provided to be exchangeable with the first adjustment lever arrangement (40), with at least one second adjusting lever (42) which is adjustable along the adjustment path (44) from the first adjustment position to the second adjustment position and inversely, when the operating element (36) is moved in the second or first direction of movement after rotation of the complete housing (12) through 180° about an imaginary axis (80) extending through the housing (12) perpendicularly to the front panel (14) for installation in a right-and-drive vehicle,
- at least a second receiving member (58) for the retaining block (64) of the Bowden cable (68), when the housing (12) adopts the installation state in a right-hand-drive vehicle after rotation through 180° about the imaginary axis (80), the at least one second receiving member (58) being arranged opposite the at least one first receiving member (56) in the extension of the adjustment path (44) of the at least one second adjusting arm (42),
- a first symbol-carrying element (92) having a plurality of symbols (96), for arrangement on the front panel (14) of the housing in the installation state for a left-hand-drive vehicle to make dear the correspondence between the position of the operating element (36) and the position of the element of the vehicle component to be adjusted, and
- a second symbol-carrying element (92') for arrangement on the front panel (14) of the housing (12) in the installation state for a right-hand-drive vehicle, the second symbol-carrying element (92') having the same symbols (96') as the first symbol carrier (92), said symbols (96') being, however, arranged and oriented in a mirror-inverted manner with respect to the symbols (96) of the first symbol carrying element (92), in relation to a mirror-inverted axis perpendicular to the imaginary axis (80) and parallel to the upper and lower walls (16, 18).

2. A control unit according to Claim 1, **characterised in that** the at least one operating element (36) is a rotary element.

3. A control unit according to Claim 1 or 2, **characterised in that** the first adjusting lever (42) of the first adjusting lever arrangement (40) is identical to the second adjusting lever (42) of the second adjusting lever arrangement (40').

4. A control unit according to one of claims 1 to 3, **characterised in that** two pivot bearings are provided for the adjusting levers (42) of the first and second adjusting lever arrangements (40, 40') and **in that**, depending on the installation of the housing (12) in a left-hand-drive or in a right-hand-drive vehicle, one or the other bearing is used for the adjusting levers.

5. A control unit according to one of claims 1 to 4, **characterised in that** a second operating element (32) is provided for arrangement on the front panel (14) when the housing (12) is in the installation state for a left-hand-drive vehicle, the second operating element (32) being configured in the manner of a rotatable adjusting wheel with symbols (90) on the section of its periphery (33) which in each case projects from the front panel (14) when rotated, said second operating element (32) being rotatable about an axis of rotation (34) parallel to the front panel (14) and to the upper and lower walls (16, 18) of the housing (12), and **in that** a further operating element (32') is provided for arrangement on the front panel (14) when the housing (12) is in the installation state for a right-hand-drive vehicle, the further operating element (32') being configured like the second operating element (32), but the symbols (90') being rotated through 180°.

6. A control unit according to one of claims 1 to 5, **characterised in that** a group (46) of a plurality of actuating buttons (48, 50, 52) arranged one above the other with associated switches (82, 84, 86) and carrying symbols (100) is arranged in the housing (12) when the housing (12) is in its installation state for a left-hand-drive vehicle, and **in that** the installed sequence (54) or orientation of the symbols (100) is in each case inverted or rotated through 180° with respect to the front panel (14) when the group of actuating buttons (48, 50, 52) is arranged on the front panel (14) of the housing (12) in the installation state for a right-hand-drive vehicle.

## Revendications

1. Unité de manipulation (10) pour un composant de véhicule, en particulier pour une installation de chauffage et/ou de climatisation, pour déplacer mécaniquement au moins un élément du composant de véhicule, en particulier un volet dans le circuit de diffusion d'air de l'installation de chauffage et/ou de climatisation, l'unité de manipulation étant pourvue de
- un boîtier (12) comportant des parois opposées supérieure et inférieure (16, 18) ainsi qu'une plaque frontale (14), et
- au moins un organe d'actionnement (36) agencé sur la plaque frontale (14),
**caractérisée par**
- un premier agencement à levier de déplacement (40) accouplé à l'organe d'actionnement (36) et comportant au moins un premier levier de déplacement (42) qui est déplaçable le long d'une course de réglage (44) hors d'une première position de déplacement jusque dans une deuxième position de déplacement et inversement, lorsque l'organe d'actionnement (36) est déplacé dans une première ou dans une deuxième direction de mouvement lors de l'orientation du boîtier (12) pour un montage dans un véhicule à direction à gauche,
- au moins un premier logement de maintien (56) pour un bloc de maintien (64) sur une gaine de guidage (72) pour une âme (76) d'une commande à câble Bowden (68), laquelle est susceptible d'être agencée sur ledit au moins un premier levier de déplacement (42), lorsque le boîtier (12) occupe l'état du montage dans un véhicule à direction à gauche, ledit au moins un premier logement de maintien (56) étant agencé sur le boîtier (12) en extension de la course de réglage (44) du bras de déplacement (42),
- un deuxième agencement à levier de déplacement (40') prévu pour remplacer le premier agencement à levier de déplacement (40), comportant au moins un deuxième levier de déplacement (42) qui est déplaçable le long de la course de réglage (44) hors de la première position de déplacement jusque dans la deuxième position de déplacement et inversement, lorsque l'organe d'actionnement (36) est déplacé dans la deuxième ou dans la première direction de mouvement, après avoir tourné de 180° l'ensemble du boîtier (12) autour d'un axe imaginaire (80) s'étendant à angle droit par rapport à la plaque frontale (14) et à travers le boîtier (12), pour le montage dans un véhicule à direction à droite,
- au moins un deuxième logement de maintien (58) pour le bloc de maintien (64) de la commande à câble Bowden (68), lorsque le boîtier (12) occupe l'état de montage dans un véhicule à direction à droite après l'avoir tourné de 180° autour de l'axe imaginaire (80), ledit au moins un deuxième logement de maintien (58) étant agencé à l'opposé dudit au moins un premier logement de maintien (56) en extension de la course de réglage (44) dudit au moins un deuxième bras de déplacement (42),
- un premier élément porteur de symboles (92) présentant plusieurs symboles (96) pour l'agencement sur la plaque frontale (14) du boîtier (12) situé dans l'état monté pour un véhicule à direction à gauche, pour préciser la correspondance de la position de l'organe d'actionnement (36) avec la position de l'élément à déplacer du composant de véhicule, et
- un deuxième élément porteur de symboles (92') pour l'agencement sur la plaque frontale (14) du boîtier (12) situé dans l'état monté pour un véhicule à direction à droite, le deuxième élément porteur de symboles (92') présentant les mêmes symboles (96') que le premier porteur de symboles (92), mais ces symboles (96') étant agencés et orientés à symétrie des symboles (96) du premier élément porteur de symboles (92) par rapport à un axe de symétrie s'étendant perpendiculairement à l'axe imaginaire (80) et parallèlement aux parois supérieure et inférieure (16, 18).

2. Unité de manipulation selon la revendication 1, **caractérisée en ce que** ledit au moins un organe d'actionnement (36) est un organe tournant.

3. Unité de manipulation selon l'une ou l'autre des revendications 1 et 2, **caractérisée en ce que** le premier levier de déplacement (42) du premier agencement à levier de déplacement (40) est identique au deuxième levier de déplacement (42) du deuxième agencement à levier de déplacement (40').

4. Unité de manipulation selon l'une des revendications 1 à 3, **caractérisée en ce que** deux paliers de rotation pour les leviers de déplacement (42) du premier et du deuxième agencement à levier de déplacement (40, 40') sont prévus sur le boîtier, et **en ce qu'**en fonction du montage du boîtier (12) dans un véhicule à direction à gauche ou à direction à droite, soit l'un soit l'autre des paliers est utilisé pour les leviers de déplacement.

5. Unité de manipulation selon l'une des revendications 1 à 4, **caractérisée en ce qu'**il est prévu un deuxième organe d'actionnement (32) destiné à être agencé sur la plaque frontale (14) dans le cas d'un boîtier (12) situé dans l'état monté pour un véhicule à direction à gauche, le deuxième organe d'actionnement (32) étant réalisé à la manière d'une roue de réglage qui tourne autour d'un axe de rotation (34) s'étendant parallèlement à la plaque frontale (14) et aux parois supérieure et inférieure (16, 18) du boîtier (12) et qui présente des symboles (90) sur sa portion périphérique (33) dépassant hors de la plaque frontale (14) lors d'une rotation, et **en ce qu'**il est prévu un autre organe d'actionnement (32') destiné à être agencé sur la plaque frontale (14) dans le cas d'un boîtier (12) situé dans l'état de montage pour un véhicule à direction à droite, l'autre organe d'actionnement (32') étant réalisé tout comme le deuxième organe d'actionnement (32), mais les symboles (90') étant tournés de 180°.

6. Unité de manipulation selon l'une des revendications 1 à 5, **caractérisée en ce qu'**il est prévu sur la plaque frontale (14) un groupe (46) de plusieurs touches d'actionnement (48, 50, 52) agencées les unes au-dessus des autres et portant des symboles (100) et comportant des commutateurs associés (82, 84, 86) dans le boîtier (12), lorsque le boîtier (12) se trouve dans son état de montage pour un véhicule à direction à gauche, et **en ce que** l'ordre de montage (54) ou l'orientation des symboles (100) est inversé(e) ou tourné(e) de 180° par rapport à la plaque frontale (14) lorsque le groupe de touches d'actionnement (48, 50, 52) est agencé sur la plaque frontale (14) du boîtier (12) dans l'état monté pour un véhicule à direction à droite.
